# EUROPEAN PATENT APPLICATION

(11) **EP 3 869 597 A1**
(43) Date of publication of application: **25.08.2021**
(21) Application number: 19873226.5
(22) Date of filing: 11.10.2019
(51) Int. Cl.: H01M 4/73, H01M 4/82

(54) **LEAD-ACID BATTERY CURRENT COLLECTOR, LEAD-ACID BATTERY, AND MANUFACTURING METHOD OF LEAD-ACID BATTERY CURRENT COLLECTOR**

(30) Priority: 16.10.2018 JP 2018194961
(71) Applicant: GS Yuasa International Ltd., Kisshoin, Minami-ku, Kyoto-shi, Kyoto 601-8520 (JP)
(72) Inventor: HAZE, Akinori, Kyoto-shi, Kyoto 601-8520 (JP)
(74) Representative: Isarpatent
(86) International application number: PCT/JP2019/040196
(87) International publication number: WO 2020/080283

(57) **Abstract**

A current collector (214) for a lead-acid battery includes a frame-shaped frame bone portion (310) and a grid portion that is formed inside the frame bone portion (310) and has an inner bone. A peripheral surface of at least a part of the inner bone in the grid portion includes a first peripheral portion (431) on which a fibrous structure is exposed and a second peripheral portion (432) on which a granular structure is exposed. At least a part of the inner bones is configured in a manner that the length of the first peripheral portion is longer than the length of the second peripheral portion on a predetermined cross section substantially perpendicular to the extension direction of the inner bone.

## Description

### TECHNICAL FIELD

The technique disclosed herein relates to a current collector for a lead-acid battery.

### BACKGROUND ART

A lead-acid battery is widely used as a secondary battery. For example, a lead-acid battery is mounted on a vehicle such as an automobile and is used as a power supply source for a starter when an engine is started and as a power supply source for various electrical components such as lights.

The lead-acid battery includes a positive electrode plate and a negative electrode plate. Each of the positive electrode plate and the negative electrode plate has a current collector and an active material supported by the current collector. In a lead-acid battery having a structure in which such an active material is supported by a current collector, when the lead-acid battery is used for a long time, metal lead of an inner bone constituting the current collector corrodes and changes to lead dioxide. This causes the volume of the inner bone to expand, and as a result, the current collector may be deformed. When the current collector is deformed, the adhesion between the current collector and the active material is impaired. For this reason, the active material falls off from the current collector and the life of the lead-acid battery is shortened.

In contrast, conventionally, in order to suppress deformation due to corrosion of the current collector, a technique of using a current collector in which the average crystal grain size of a surface layer is smaller than the average crystal grain size of a central layer has been known (see, for example, Patent Document 1).

### PRIOR ART DOCUMENT

### PATENT DOCUMENT

Patent Document 1: JP-A-2005-56622

### SUMMARY OF THE INVENTION

### PROBLEMS TO BE SOLVED BY THE INVENTION

In general, corrosion of a current collector tends to progress along the grain boundary exposed on the surface of an inner bone of the current collector. For this reason, in the conventional lead-acid battery described in Patent Document 1, even if the average crystal grain size of the surface layer is smaller than the average crystal grain size of the central layer, corrosion still progresses along the grain boundary exposed to the surface of the inner bone. Accordingly, the deformation due to the corrosion of the current collector cannot be sufficiently suppressed, and there has been room for improvement.

The present description discloses a technique capable of suppressing deformation due to corrosion of a current collector for a lead-acid battery.

### MEANS FOR SOLVING THE PROBLEMS

The current collector for a lead-acid battery disclosed in the present disclosure is a current collector for a lead-acid battery that includes a frame bone portion, and a grid portion that is formed inside the frame bone portion and has an inner bone. The inner bone has a fibrous metal structure, and includes a first peripheral portion in which the fibrous metal structure extends in the plane direction along a peripheral surface of the inner bone, and a second peripheral portion in which the fibrous metal structure extends in the depth direction intersecting a peripheral surface of the inner bone. A length of the first peripheral portion is longer than a length of the second peripheral portion on a predetermined cross section substantially perpendicular to the extension direction of the inner bone.

### BRIEF DESCRIPTION OF THE DRAWINGS

Fig. 1 is a perspective view illustrating an external configuration of a lead-acid battery 100 according to the present embodiment.
Fig. 2 is an explanatory view illustrating a YZ cross-sectional configuration of the lead-acid battery 100 at the position of II-II in Fig. 1.
Fig. 3 is an explanatory view illustrating a YZ cross-sectional configuration of the lead-acid battery 100 at the position of III-III in Fig. 1.
Fig. 4 is an explanatory view illustrating a YZ plane configuration of a positive electrode current collector 212.
Fig. 5 is an explanatory view illustrating a captured image of an XY cross section of a vertical inner bone 410 at the position of V-V in Fig. 4.
Fig. 6 is an explanatory view illustrating by enlarging a portion of the XY cross section of the vertical inner bone 410 in Fig. 5.
Fig. 7 is a flowchart showing an example of a manufacturing method of the positive electrode current collector 212.
Fig. 8 is a graph showing a relationship between a ratio of the length of a second peripheral portion 432 of the vertical inner bone 410 and a corrosion rate and a deformation amount in the positive electrode current collector 212.

### MODE FOR CARRYING OUT THE INVENTION

The technique disclosed in the present description can be realized in modes described below.
(1) The current collector for a lead-acid battery disclosed in the present disclosure is a current collector for a lead-acid battery that includes a frame bone portion, and a grid portion that is formed inside the frame bone portion and has an inner bone. The inner bone has a fibrous metal structure, and includes a first peripheral portion in which the fibrous metal structure extends in the plane direction along a peripheral surface of the inner bone, and a second peripheral portion in which the fibrous metal structure extends in the depth direction intersecting a peripheral surface of the inner bone. A length of the first peripheral portion is longer than a length of the second peripheral portion on a predetermined cross section substantially perpendicular to the extension direction of the inner bone.
   In the present current collector for a lead-acid battery, the inner bone of the grid portion includes the first peripheral portion in which the fibrous metal structure extends in the plane direction along the peripheral surface of the inner bone, and the second peripheral portion in which the fibrous metal structure extends in the depth direction intersecting the peripheral surface is the inner bone. In general, corrosion of the current collector progresses preferentially at the grain boundary exposed on the peripheral surface. In the first peripheral portion, since the fibrous metal structure extends in the plane direction of the inner bone, the grain boundary extends longer in the plane direction of the inner bone than in the depth direction of the inner bone. For this reason, the corrosive layer formed on the first peripheral portion side is formed along the plane direction of the inner bone, and is unlikely to be formed down to a deep position inside the inner bone in the depth direction. As a result, the corrosive layer formed along the first peripheral portion has a low bonding strength with the current collector (inner bone), and is relatively easily separated from the current collector when gas is generated on the interface between the current collector (first peripheral portion) and the corrosive layer.
   In contrast, in the second peripheral portion, since the fibrous metal structure extends in the depth direction of the inner bone, the grain boundary extends longer in the depth direction of the inner bone than in the plane direction of the inner bone. For this reason, unlike the first peripheral portion, the corrosive layer formed on the second peripheral portion side extends in a wedge shape to a deep position inside the inner bone. As a result, the corrosive layer formed along the second peripheral portion has a high bonding strength with the current collector (inner bone) and is unlikely to be peeled off from the current collector even if gas is generated on the interface between the current collector (second peripheral portion) and the corrosive layer, stress is applied to the inner bone, and the inner bone is deformed. That is, in the second peripheral portion in which the fibrous metal structure extends in the depth direction of the inner bone, the corrosive layer is unlikely to be peeled off as compared with the first peripheral portion in which the fibrous metal structure extends in the plane direction of the inner bone, and stress from the corrosive layer which is a factor of deformation of the current collector is likely to be applied.
   In contrast, in the present current collector for a lead-acid battery, the length of the first peripheral portion is longer than the length of the second peripheral portion on a predetermined cross section substantially perpendicular to the extension direction of the inner bone. That is, on the peripheral surface of the inner bone, the portion where the fibrous metal structure extends in the plane direction of the inner bone is larger than the portion where the fibrous metal structure extends in the depth direction of the inner bone. For this reason, deformation due to corrosion of the current collector can be suppressed as compared with a configuration in which the portion where the fibrous metal structure extends in the plane direction of the inner bone is smaller than the portion where the fibrous metal structure extends in the depth direction of the inner bone.
(2) In the current collector for a lead-acid battery described above, on the predetermined cross section, the length of the second peripheral portion may be configured to be 40% or less the entire circumference of the cross section. In the present current collector for a lead-acid battery, on the predetermined cross section, the length of the second peripheral portion is 40% or less the entire circumference of the cross section. In this manner, on the predetermined cross section, the stress from the corrosive layer, which is a factor of deformation of the current collector, is reduced as compared with a configuration in which the length of the second peripheral portion is larger than 40% the entire circumference of the cross section, and deformation due to corrosion of the current collector can be effectively suppressed.
(3) In the current collector for a lead-acid battery described above, on the predetermined cross section, the length of the second peripheral portion may be configured to be 30% or less the entire circumference of the cross section. In the present current collector for a lead-acid battery, on the predetermined cross section, the length of the second peripheral portion is 30% or less the entire circumference of the cross section. In this manner, on the predetermined cross section, the stress from the corrosive layer, which is a factor of deformation of the current collector, is reduced as compared with a configuration in which the length of the second peripheral portion is larger than 30% the entire circumference of the cross section, and deformation due to corrosion of the current collector can be more reliably suppressed.
(4) In the lead-acid battery described above, the lead-acid battery may be configured to include a positive electrode plate, a negative electrode plate, and a separator arranged between the positive electrode plate and the negative electrode plate, and at least one of the positive electrode plate and the negative electrode plate may include any of the current collector for a lead-acid battery described above and an electrode material applied to the current collector for a lead-acid battery. According to the present lead-acid battery, deformation due to corrosion of the current collector is suppressed. Note that the plate (the positive electrode plate, the negative electrode plate) is composed of a current collector and an electrode material (an active material, an additive, and others). That is, the electrode material is obtained by removing the current collector from the plate, and is generally referred to as an "active material".
(5) A manufacturing method of a current collector for a lead-acid battery disclosed in the present description is a manufacturing method of a current collector for a lead-acid battery that includes a frame-shaped frame bone portion and a grid portion that is formed inside the frame bone portion and has an inner bone, in which a peripheral surface of at least the inner bone of the grid portion includes a first peripheral portion on which a fibrous structure is exposed and a second peripheral portion on which a granular structure is exposed, and, in the at least a part of the inner bone, a length of the first peripheral portion is configured to be longer than a length of the second peripheral portion on a predetermined cross section substantially perpendicular to an extension direction of the inner bone. The manufacturing method includes a preparing step of preparing a rolled plate, a punching step of forming an intermediate current collector having a plurality of intermediate bones formed in a grid shape by performing punching on the rolled plate, and a pressing step of performing press working on the intermediate current collector from a first direction substantially orthogonal to the intermediate current collector to deform at least a part of the plurality of intermediate bones so that at least one end portion in a width direction orthogonal to both the first direction and an extension direction of the intermediate bone is thinner than a central portion so as to form the at least a part of the inner bone. According to the manufacturing method of a current collector for a lead-acid battery, it is possible to manufacture a current collector in which deformation due to corrosion is suppressed.
(6) A manufacturing method of a current collector for a lead-acid battery disclosed in the present description is a manufacturing method of a current collector for a lead-acid battery including a punching step of punching a rolled material formed of lead or a lead alloy from a thickness direction of the rolled material to form an intermediate current collector, and a deforming step of performing deformation processing on the intermediate current collector. In the punching step, the rolled material is punched so that the intermediate current collector has an inner bone extending in a direction substantially parallel to the intermediate current collector and substantially orthogonal to a rolling direction of the rolled material, and, in the deformation step, the deformation processing is applied to the inner bone from a thickness direction of the rolled material. According to the manufacturing method of a current collector for a lead-acid battery, the length of the first peripheral portion is longer than the length of the second peripheral portion on a predetermined cross section substantially perpendicular to the extension direction of the inner bone, so that it is possible to manufacture a current collector in which deformation due to corrosion is suppressed.

### A. Embodiment:

### A-1. Configuration:

### (Configuration of lead-acid battery 100)

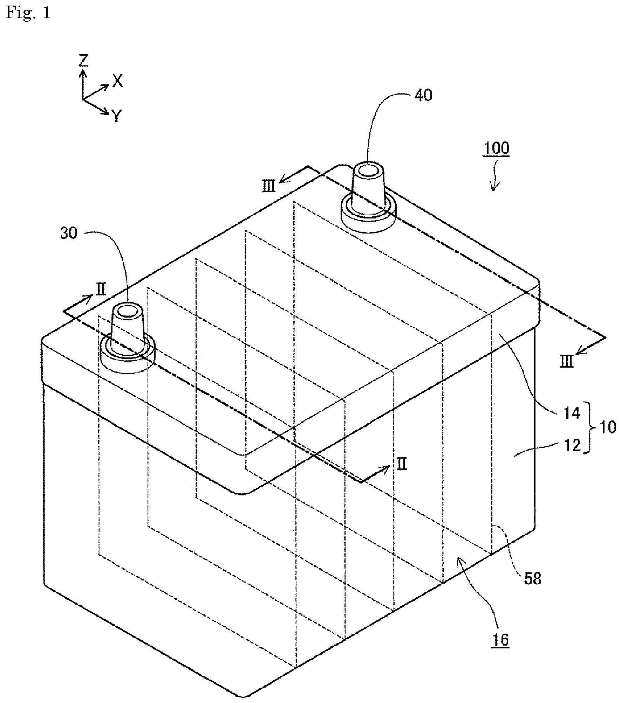

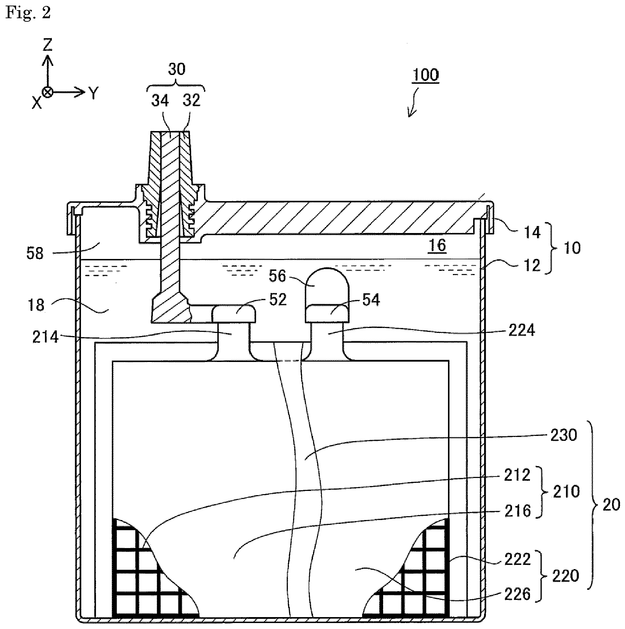

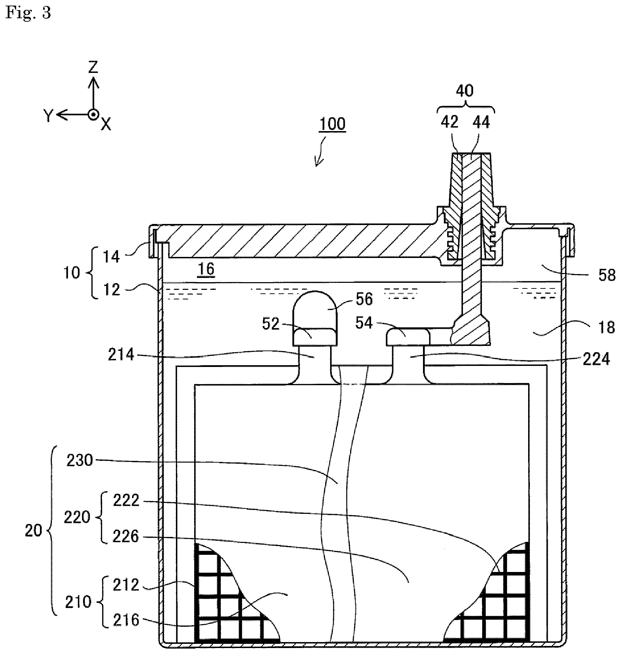

Fig. 1 is a perspective view illustrating an external configuration of the lead-acid battery 100 according to the present embodiment. Fig. 2 is an explanatory view illustrating a YZ cross-sectional configuration of the lead-acid battery 100 at the position of II-II in Fig. 1. Fig. 3 is an explanatory view illustrating a YZ cross-sectional configuration of the lead-acid battery 100 at the position of III-III in Fig. 1. Note that, in Figs. 2 and 3, for convenience, the configuration of an electrode plate group 20 described later is expressed in a form different from the actual one so that the configuration of the electrode plate group 20 is shown in an easy-to-understand manner. Each diagram shows XYZ axes that are orthogonal to each other to identify a direction. In the present description, for convenience, a Z-axis positive direction is referred to as "upward" and a Z-axis negative direction is referred to as "downward". However, the lead-acid battery 100 may be installed in a direction different from such a direction in actuality.

As shown in Figs. 1 to 3, the lead-acid battery 100 includes a housing 10, a positive electrode side terminal portion 30, a negative electrode side terminal portion 40, and a plurality of the electrode plate groups 20. Hereinafter, the positive electrode side terminal portion 30 and the negative electrode side terminal portion 40 are also collectively referred to as "terminal portions 30 and 40".

### (Configuration of housing 10)

The housing 10 has a container 12 and a lid 14. The container 12 is a substantially rectangular parallelepiped case having an opening portion on the upper surface, and is formed of, for example, synthetic resin. The lid 14 is a member arranged so as to close the opening portion of the container 12, and is formed of, for example, synthetic resin. A peripheral edge portion of the lower surface of the lid 14 and a peripheral edge portion of the opening portion of the container 12 are joined by, for example, heat welding. In this manner, a space in which airtightness from the outside is maintained is formed inside the housing 10. The space inside the housing 10 is divided by a partition 58 into a plurality of (for example, six) cell chambers 16 arranged in a predetermined direction (X-axis direction in the present embodiment). Hereinafter, the direction in which a plurality of the cell chambers 16 are arranged (X-axis direction) is referred to as a "cell arrangement direction".

One of the electrode plate group 20 is housed in each of the cell chambers 16 in the housing 10. For this reason, for example, in a case where the space inside the housing 10 is divided into six of the cell chambers 16, the lead-acid battery 100 includes six of the electrode plate groups 20. Further, each of the cell chambers 16 in the housing 10 contains an electrolyte solution 18 containing dilute sulfuric acid, and the entire electrode plate group 20 is immersed in the electrolyte solution 18. The electrolyte solution 18 is injected into the cell chamber 16 from an electrolyte solution filling port (not shown) provided on the lid 14.

### (Configuration of electrode plate group 20)

The electrode plate group 20 includes a plurality of positive electrode plates 210, a plurality of negative electrode plates 220, and a separator 230. A plurality of the positive electrode plates 210 and a plurality of the negative electrode plates 220 are arranged so that the positive electrode plates 210 and the negative electrode plates 220 are alternately arranged. Hereinafter, the positive electrode plate 210 and the negative electrode plate 220 are also collectively referred to as "electrode plates 210 and 220".

The positive electrode plate 210 has a positive electrode current collector 212 and a positive active material 216 supported by the positive electrode current collector 212. The positive electrode current collector 212 is a conductive member having bones arranged in a substantially grid pattern or a net-like pattern, and is formed of, for example, lead or a lead alloy (including, for example, a Pb-Ca based alloy). Further, the positive electrode current collector 212 has a positive electrode ear portion 214 projecting upward near the upper end of the positive electrode current collector 212. The detailed configuration of the positive electrode current collector 212 will be described later. The positive active material 216 contains lead dioxide. The positive active material 216 may further contain a publicly-known additive. The positive electrode plate 210 having such a configuration can be manufactured in a manner that, for example, the positive electrode current collector 212 is applied or filled with a paste for a positive active material containing lead dioxide, the paste for a positive active material is cured and dried under a publicly-known condition, and then publicly-known formation treatment is performed. Note that the positive active material 216 in the present embodiment is obtained by removing the positive electrode current collector 212 from the positive electrode plate 210, and corresponds to the electrode material in the claims.

The negative electrode plate 220 has a negative electrode current collector 222 and a negative active material 226 supported by the negative electrode current collector 222. The negative electrode current collector 222 is a conductive member having bones arranged in a substantially grid pattern or a net-like pattern, and is formed of, for example, lead or a lead alloy. Further, the negative electrode current collector 222 has a negative electrode ear portion 224 projecting upward near the upper end of the negative electrode current collector 222. The negative active material 226 contains lead (spongy lead). The negative active material 226 may further contain other additives (for example, carbon, lignin, barium sulfate, and the like) which are publicly known. The negative electrode plate 220 having such a configuration can be manufactured in a manner that, for example, the negative electrode current collector 222 is applied or filled with a paste for a negative active material containing lead, the paste for a negative active material is cured and dried under a publicly-known condition, and then publicly-known formation treatment is performed. Note that the negative active material 226 in the present embodiment is obtained by removing the negative electrode current collector 222 from the negative electrode plate 220, and corresponds to the electrode material in the claims.

The separator 230 is formed of an insulating material (for example, glass or synthetic resin). The separator 230 is arranged so as to be interposed between the positive electrode plate 210 and the negative electrode plate 220 adjacent to each other. The separator 230 may be configured as an integral member, or may be configured as a set of a plurality of members provided for each combination of the positive electrode plate 210 and the negative electrode plate 220.

The positive electrode ear portion 214 of a plurality of the positive electrode plates 210 constituting the electrode plate group 20 are connected to a positive electrode side strap 52 formed of, for example, lead or a lead alloy. That is, a plurality of the positive electrode plates 210 are electrically connected in parallel via the positive electrode side strap 52. Similarly, the negative electrode ear portion 224 of a plurality of the negative electrode plates 220 constituting the electrode plate group 20 are connected to a negative electrode side strap 54 formed of, for example, lead or a lead alloy. That is, a plurality of the negative electrode plates 220 are electrically connected in parallel via the negative electrode side strap 54. Hereinafter, the positive electrode side strap 52 and the negative electrode side strap 54 are also collectively referred to as "straps 52 and 54".

In the lead-acid battery 100, the negative electrode side strap 54 housed in one of the cell chambers 16 is connected to the positive electrode side strap 52 housed in another one of the cell chambers 16 adjacent to one side (for example, X-axis positive direction side) of the one of the cell chambers 16 via a connecting member 56 formed of, for example, lead or a lead alloy. Further, the positive electrode side strap 52 housed in the one of the cell chambers 16 is connected to the negative electrode side strap 54 housed in another one of the cell chambers 16 adjacent to the other side (for example, X-axis negative direction side) of the one of the cell chambers 16 via the connecting member 56. That is, a plurality of the electrode plate groups 20 included in the lead-acid battery 100 are electrically connected in series via the straps 52 and 54 and the connecting member 56. Note that, as shown in Fig. 2, the positive electrode side strap 52 housed in the cell chamber 16 located at the end on one side (X-axis negative direction side) in the cell arrangement direction is not connected to the connecting member 56 but to a positive pole 34 described later. Further, as shown in Fig. 3, the negative electrode side strap 54 housed in the cell chamber 16 located at the end on the other side (X-axis positive direction side) in the cell arrangement direction is not connected to the connecting member 56 but to a negative pole 44 described later.

### (Configuration of terminal portions 30 and 40)

The positive electrode side terminal portion 30 is arranged near an end portion on one side (X-axis negative direction side) in the cell arrangement direction in the housing 10, and the negative electrode side terminal portion 40 is arranged near an end portion on the other side (X-axis positive direction side) in the cell arrangement direction in the housing 10.

As shown in Fig. 2, the positive electrode side terminal portion 30 includes a positive electrode side bushing 32 and the positive pole 34. The positive electrode side bushing 32 is a substantially cylindrical conductive member in which a hole penetrating in the vertical direction is formed, and is formed of, for example, a lead alloy. A lower portion of the positive electrode side bushing 32 is embedded in the lid 14 by insert molding, and an upper portion of the positive electrode side bushing 32 projects upward from the upper surface of the lid 14. The positive pole 34 is a substantially cylindrical conductive member, and is formed of, for example, a lead alloy. The positive pole 34 is inserted into the hole of the positive electrode side bushing 32. An upper end portion of the positive pole 34 is located at substantially the same position as an upper end portion of the positive electrode side bushing 32, and is joined to the positive electrode side bushing 32 by welding, for example. A lower end portion of the positive pole 34 projects downward from a lower end portion of the positive electrode side bushing 32, and further projects downward from the lower surface of the lid 14, and, as described above, is connected to the positive electrode side strap 52 housed in the cell chamber 16 located at the end on one side (X-axis negative direction side) in the cell arrangement direction.

As shown in Fig. 3, the negative electrode side terminal portion 40 includes a negative electrode side bushing 42 and a negative pole 44. The negative electrode side bushing 42 is a substantially cylindrical conductive member in which a hole penetrating in the vertical direction is formed, and is formed of, for example, a lead alloy. A lower portion of the negative electrode side bushing 42 is embedded in the lid 14 by insert molding, and an upper portion of the negative electrode side bushing 42 projects upward from the upper surface of the lid 14. The negative pole 44 is a substantially cylindrical conductive member, and is formed of, for example, a lead alloy. The negative pole 44 is inserted into the hole of the negative electrode side bushing 42. An upper end portion of the negative pole 44 is located at substantially the same position as an upper end portion of the negative electrode side bushing 42, and is joined to the negative electrode side bushing 42 by welding, for example. A lower end portion of the negative pole 44 projects downward from a lower end portion of the negative electrode side bushing 42, and further projects downward from the lower surface of the lid 14, and, as described above, is connected to the negative electrode side strap 54 housed in the cell chamber 16 located at the end on the other side (X-axis positive direction side) in the cell arrangement direction.

When the lead-acid battery 100 is discharged, a load (not shown) is connected to the positive electrode side bushing 32 of the positive electrode side terminal portion 30 and the negative electrode side bushing 42 of the negative electrode side terminal portion 40, and power generated by a reaction at the positive electrode plate 210 of each of the electrode plate groups 20 (reaction in which lead sulfate is generated from lead dioxide) and a reaction at the negative electrode plate 220 (reaction in which lead sulfate is generated from lead (spongy lead)) is supplied to the load. When the lead-acid battery 100 is charged, a power supply (not shown) is connected to the positive electrode side bushing 32 of the positive electrode side terminal portion 30 and the negative electrode side bushing 42 of the negative electrode side terminal portion 40, and a reaction at the positive electrode plate 210 of each of the electrode plate groups 20 (reaction in which lead dioxide is generated from lead sulfate) and a reaction at the negative electrode plate 220 (reaction in which lead (spongy lead) is generated from lead sulfate) occur due to power supplied from the power supply, and the lead-acid battery 100 is charged.

### A-2. Detailed configuration of positive electrode current collector 212:

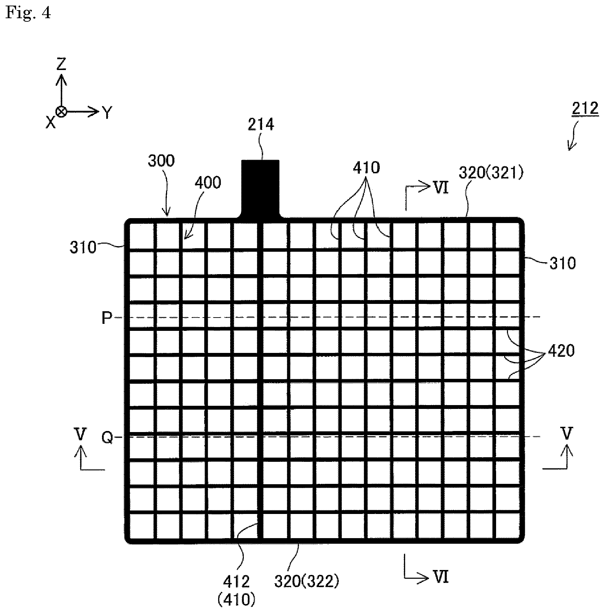

Fig. 4 is an explanatory view illustrating a YZ plane configuration of the positive electrode current collector 212. As shown in Fig. 4, the positive electrode current collector 212 includes a frame 300 which is a substantially rectangular frame body, and an inner portion 400 arranged on the inner peripheral side of the frame 300. The positive electrode current collector 212 is formed of, for example, lead or a lead alloy (lead calcium alloy, or the like). The frame 300 corresponds to the frame bone portion in the claims, and the inner portion 400 corresponds to the grid portion in the claims.

The frame 300 includes a pair of vertical frame bones 310 extending substantially in parallel in the vertical direction (Z-axis direction) and a pair of horizontal frame bones 320 extending substantially in parallel in the horizontal direction (Y-axis direction) substantially orthogonal to the vertical direction. The inner portion 400 includes a plurality (fourteen in the present embodiment) of vertical inner bones 410 extending substantially in parallel in the vertical direction and a plurality (eleven in the present embodiment) of horizontal inner bones 420 extending substantially in parallel in the horizontal direction. In the inner portion 400, a plurality of the vertical inner bones 410 and a plurality of the horizontal inner bones 420 are formed in a grid pattern so as to be substantially orthogonal to each other, and at each intersection, the vertical inner bones 410 and the transverse inner bones 420 are joined so as to be electrically connected. Each of the inner bones 410 and 420 is a linear body extending linearly.

Further, in the present embodiment, of a plurality of the vertical inner bones 410, an area of a cross section orthogonal to the axial direction of a basic vertical inner bone 412, which is one of the vertical inner bones 410 extending downward from the positive electrode ear portion 214, is larger than an area of a cross section orthogonal to the axial direction of the other vertical inner bones 410 over the entire length of the basic vertical inner bone 412. For this reason, in the basic vertical inner bone 412, the electrical resistance is lower than that in the other vertical inner bones 410, and current easily flows. The vertical inner bone 410 and the horizontal inner bone 420 correspond to the inner bone in the claims. Note that, in the present description, substantially parallel means that an angle T (0 degrees ≤ T ≤ 90 degrees) formed by two bones (frame bone or inner bone) is 5 degrees or less, and substantially orthogonal (substantially perpendicular) means that an angle X (0 degrees ≤ X ≤ 90 degrees) formed by the two bones (frame bone or inner bone) is 85 degrees or more.

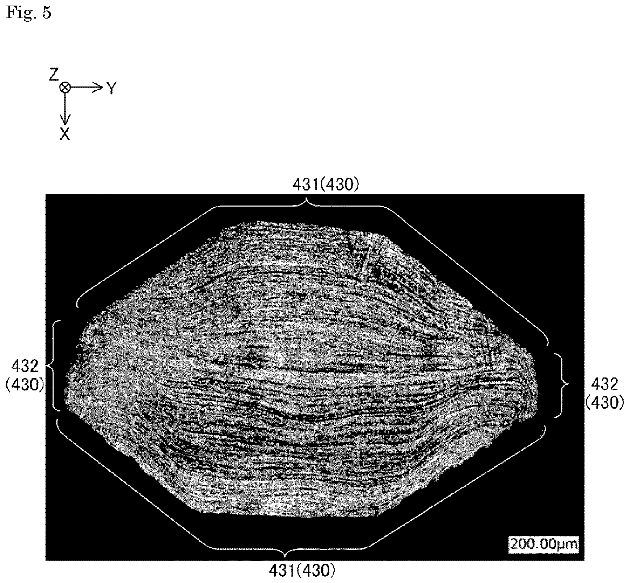

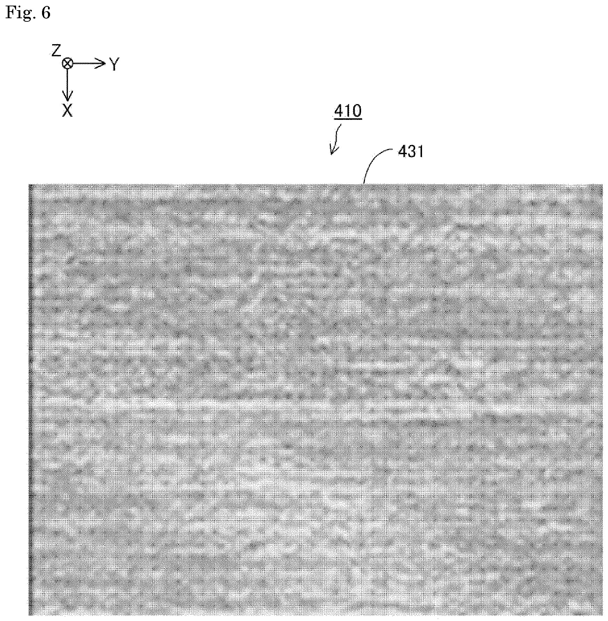

Fig. 5 is an explanatory view illustrating a captured image of an XY cross section of the vertical inner bone 410 at the position of V-V in Fig. 4. Further, Fig. 6 is an explanatory view illustrating by enlarging a portion of the XY cross section of the vertical inner bone 410 in Fig. 5. Hereinafter, regarding each of the vertical inner bone 410 and the horizontal inner bone 420, the length in a direction substantially orthogonal to the positive electrode current collector 212 (X-axis direction) is referred to as "thickness of each of the inner bones 410 and 420". Further, regarding the vertical inner bone 410, a direction substantially parallel to the positive electrode current collector 212 and substantially orthogonal to the vertical inner bone 410 (Y-axis direction) is referred to as "width direction of the vertical inner bone 410", and the length in the width direction of the vertical inner bone 410 is referred to as "width of the vertical inner bone 410". Further, regarding the horizontal inner bone 420, a direction substantially parallel to the positive electrode current collector 212 and substantially orthogonal to the horizontal inner bone 420 (Z-axis direction) is referred to as "width direction of the horizontal inner bone 420", and the length in the width direction of the horizontal inner bone 420 is referred to as "width of the horizontal inner bone 420".

As shown in Fig. 5, in an XY cross section substantially perpendicular to the extension direction (Z-axis direction) of the vertical inner bone 410, in the outer shape of the vertical inner bone 410, the thickness of both end portions in the width direction (Y-axis direction) of the vertical inner bone 410 is smaller than the thickness of a central portion. Specifically, the outer shape in the XY cross section of the vertical inner bone 410 is substantially octagonal. In the present embodiment, the outer shape and size in the XY cross section of the vertical inner bone 410 are substantially the same over the entire length of the vertical inner bone 410.

Further, as shown in Fig. 5, a peripheral surface 430 of the vertical inner bone 410 includes a pair of first peripheral portions 431 and a pair of second peripheral portions 432. The first peripheral portion 431 is located on each of both sides of the vertical inner bone 410 in a direction substantially orthogonal to the positive electrode current collector 212 (X-axis direction). Each of the first peripheral portions 431 is a surface region in which a fibrous metal structure extends in a plane direction along the peripheral surface 430 of the vertical inner bone 410 (hereinafter, simply referred to as "plane direction of the vertical inner bone 410"). Note that, in the present embodiment, a pair of the first peripheral portions 431 are a surface region excluding a pair of the second peripheral portions 432 on the peripheral surface 430 of the vertical inner bone 410. In contrast, the second peripheral portion 432 is located on each of both sides of the vertical inner bone 410 in the width direction (Y-axis direction) of the positive electrode current collector 212. The second peripheral portion 432 is a surface region in which a fibrous metal structure extends in a depth direction intersecting the peripheral surface 430 of the vertical inner bone 410 (hereinafter, simply referred to as "depth direction of the vertical inner bone 410"). In other words, a pair of the second peripheral portions 432 are surface regions located at both ends in the width direction (Y-axis direction) of the vertical inner bone 410, and are a surface region that is not the first peripheral portion in the surface region of the vertical inner bone 410.

The fibrous metal structure as shown in Figs. 5 and 6 is, for example, a rolled structure formed by extension of crystal grains by rolling. For this reason, in the first peripheral portion 431, the grain boundary of the fibrous metal structure extends longer in a direction along the first peripheral portion 431 (Y-axis direction) than in the depth direction of the vertical inner bone 410 (X-axis direction of Figs. 5 and 6).

Similarly, in the second peripheral portion 432, the grain boundary extends longer in the direction intersecting the second peripheral portion 432 (X-axis direction) than in the direction along the second peripheral portion 432. Note that, in a case where the positive electrode current collector 212 of the present embodiment is manufactured by punching a rolled sheet, a layer on the upper side in the punching direction is involved at the time of punching and plastic strain is generated, and, on the surface layer of the second peripheral portion 432, a fibrous metal structure extending in the plane direction of the vertical inner bone 410 may be exposed. Even in such a case, at a position at a certain depth or deeper (for example, 55 pm) from the surface, the fibrous metal structure extending in the depth direction (in other words, the metal structure in which the grain boundary extends in the depth direction of the vertical inner bone 410) is formed. Note that, in the present embodiment, the surface region of the vertical inner bone 410 in which a fibrous metal structure extending in the depth direction of the vertical inner bone 410 is formed at a position at a certain depth or deeper from the surface is also the second peripheral portion 432.

Further, the first peripheral portion 431 and the second peripheral portion 432 can be discriminated as described below. As shown in Fig. 5, a layered metal structure is observed in a predetermined cross section of the vertical inner bone 410. Here, the portion where the layered structure along the plane direction of the vertical inner bone 410 can be observed in the cross section is referred to as the first peripheral portion 431. Further, the portion in which the layered structure is bent from the depth direction of the vertical inner bone 410 to the plane direction of the vertical inner bone 410 near the peripheral surface 430 of the vertical inner bone 410, or the portion where the layered structure cannot be observed on the peripheral surface 430 of the vertical inner bone 410 is referred to as the second peripheral portion.

In the vertical inner bone 410 of the present embodiment, the total length of a pair of the first peripheral portions 431 is longer than the total length of a pair of the second peripheral portions 432 in the XY cross section over the entire length of the vertical inner bone 410. In other words, in the XY cross section, the ratio of the total length of the first peripheral portion 431 to the total peripheral length of the vertical inner bone 410 is higher than the ratio of the total length of the second peripheral portion 432 to the total peripheral length of the vertical inner bone 410. That is, on the peripheral surface 430 of the vertical inner bone 410, the portion where the fibrous metal structure extends in the plane direction of the vertical inner bone 410 is larger than the portion where the fibrous metal structure extends in the depth direction of the vertical inner bone 410. Note that, in the XY cross section, the length of the second peripheral portion 432 is preferably 40% or less the entire circumference of the XY cross section of the vertical inner bone 410, and is more preferably 30% or less the entire circumference of the XY cross section of the vertical inner bone 410.

Note that, in the XZ cross section substantially perpendicular to the extension direction (Y-axis direction) of the horizontal inner bone 420, the outer shape of the horizontal inner bone 420 is substantially the same as the outer shape in the XY cross section of the vertical inner bone 410, and the thickness of both end portions in the width direction (Z-axis direction) of the horizontal inner bone 420 is smaller than the thickness of the central portion. In the present embodiment, the horizontal inner bone 420 has substantially the same outer shape in the XZ cross section over the entire length. The peripheral surface 440 of the horizontal inner bone 420, as a whole, has a fibrous metal structure extending mainly in the plane direction of the vertical inner bone 410.

### A-3. Manufacturing method of the positive electrode current collector 212 of the present embodiment:

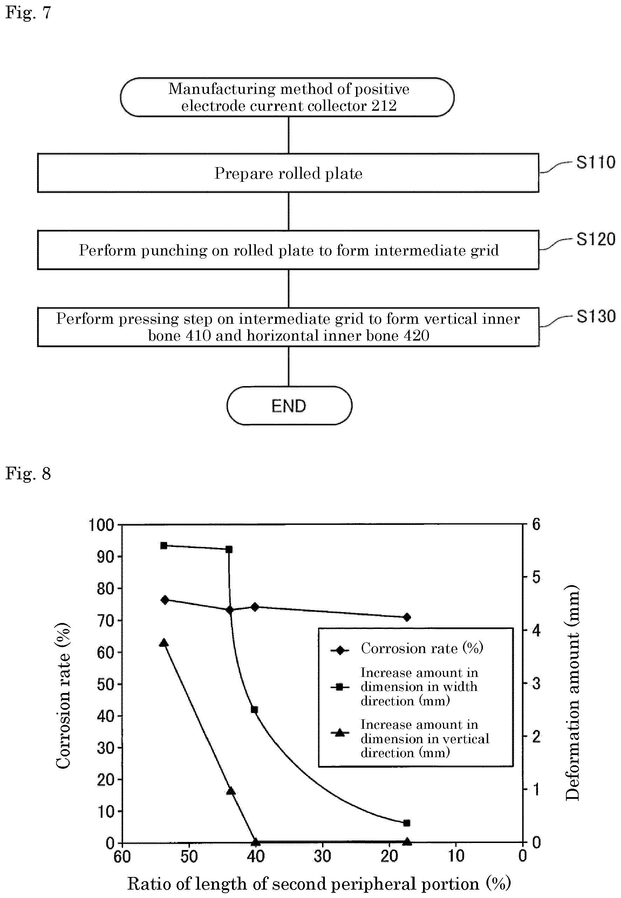

A manufacturing method of the positive electrode current collector 212 having the above-described configuration is as described below, for example. Fig. 7 is a flowchart showing an example of the manufacturing method of the positive electrode current collector 212.

First, a rolled plate is prepared (S110). The rolled plate is a plateshaped member formed by rolling a slab made from, for example, a lead alloy into so that the slab has a predetermined width and thickness using a rolling mill (not shown). The metal structure (grain boundary constituting the metal structure) in the rolled plate extends along the rolling direction (Y-axis direction of the positive electrode current collector 212 illustrated in Fig. 4) by the rolling mill.

Next, the rolled plate is punched to form an intermediate current collector having a plurality of intermediate bones formed in a grid pattern (S120). Here, the intermediate current collector is in a state before press working described later is performed. The outer shape of the cross section substantially orthogonal to the extension direction of each of the intermediate bones of the intermediate current collector is substantially rectangular parallelepiped. The intermediate bones include a first intermediate bone extending in a direction (Z-axis direction) substantially orthogonal to the rolling direction of the rolled plate and a second intermediate bone extending in a direction (Y-axis direction) substantially parallel to the rolling direction. Of the peripheral surface of the first intermediate bone, a surface (XY plane) substantially parallel to the intermediate current collector has a fibrous metal structure extending in the plane direction of the vertical inner bone 410, and a surface (XZ plane) substantially perpendicular to the intermediate current collector has a fibrous metal structure extending in the depth direction of the vertical inner bone 410. Further, the peripheral surface of the second intermediate bone has a fibrous metal structure extending in a direction along the periphery.

Next, press working is performed from a direction (X-axis direction) substantially orthogonal to the intermediate current collector for each of the intermediate bones of the intermediate current collector to prepare the positive electrode current collector 212 (S130). Specifically, by press working, each of the intermediate bones is deformed so that both end portions in the width direction (direction parallel to the intermediate current collector and substantially orthogonal to the intermediate bone) of the intermediate bone become thinner than the central portion. In this manner, the second peripheral portion 432 in which the fibrous metal structure extends in the depth direction of the vertical inner bone 410 is narrowed, and as a result, the above-described vertical inner bone 410 is formed. Further, the above-described horizontal inner bone 420 is formed as both end portions of the second intermediate bone are crushed.

### A-4. Effect of present embodiment:

In a case where the positive electrode current collector 212 is formed of lead or a lead alloy as described above, the positive electrode current collector 212 may be deformed during use of the lead-acid battery 100. The mechanism of deformation of the positive electrode current collector 212 is as described below. That is, the corrosion of the positive electrode current collector 212 progresses to the inside of the positive electrode current collector 212 along the grain boundary exposed on the surface of the positive electrode current collector 212 (the vertical inner bone 410, the horizontal inner bone 420). When metal Pb of the positive electrode current collector 212 changes to PbO2, which is a corrosive layer (corrosion product) generated by electrochemical oxidation, volume expansion occurs, and stress is generated near the corroded grain boundary. When this stress is applied to the inside of the positive electrode current collector 212 which has not been corroded yet, the vertical inner bone 410 and the horizontal inner bone 420 are extended by volume expansion, and as a result, the positive electrode current collector 212 is deformed. When the positive electrode current collector 212 is deformed, the positive active material 216 falls off from the positive electrode current collector 212 and the capacity of the lead-acid battery 100 may be lowered, or short circuit may occur between the positive electrode current collector 212 and the negative electrode plate 220 or the negative electrode side strap 54 arranged in the vicinity of the positive electrode current collector 212.

In contrast, in the lead-acid battery 100 of the present embodiment, the peripheral surface 430 of the vertical inner bone 410 of the positive electrode current collector 212 includes the first peripheral portion 431 in which a fibrous metal structure extends in the plane direction of the vertical inner bone 410, and the second peripheral portion 432 in which a fibrous metal structure extends in the depth direction of the vertical inner bone 410. The grain boundary in the first peripheral portion 431 extends longer in the direction (Y-axis direction) along the first peripheral portion 431 than in the direction (X-axis direction) intersecting the first peripheral portion 431 (the peripheral surface 430 of the vertical inner bone 410). That is, as can be seen from Fig. 5, in the first peripheral portion 431, fibrous metal structures are laminated in the depth direction from the peripheral surface 430 of the vertical inner bone 410 to have a layered shape. For this reason, the grain boundary in the first peripheral portion 431 extends long in the direction (Y-axis direction) along the first peripheral portion 431, and does not extend to a deep position inside the vertical inner bone 410. In this manner, the corrosive layer formed on the first peripheral portion 431 side is likely to be formed so as to extend long along the first peripheral portion 431, and is unlikely to be formed down to a deep position inside the vertical inner bone 410. As a result, the corrosive layer formed along the first peripheral portion 431 has a low bonding strength with the positive electrode current collector 212, and is relatively easily separated from the positive electrode current collector 212 when gas is generated on the interface between the positive electrode current collector 212 (first peripheral portion 431) and the corrosive layer.

In contrast, the grain boundary in the second peripheral portion 432 in which a fibrous metal structure extends in the depth direction of the vertical inner bone 410 extends longer in the direction (X-axis direction) intersecting the second peripheral portion 432 than in the direction along the second peripheral portion 432 (the peripheral surface 430 of the vertical inner bone 410). That is, as can be seen from Fig. 5, in the second peripheral portion 432, since the fibrous metal structure extends in the depth direction of the vertical inner bone 410, the grain boundary also extends in a direction substantially orthogonal to the second peripheral portion 432. For this reason, in the second peripheral portion 432, the grain boundary extends to a deep portion inside the vertical inner bone 410. For this reason, the corrosive layer formed on the second peripheral portion 432 side is unlikely to extend long along the second peripheral portion 432, and likely to extend in a wedge shape to a deep position inside the vertical inner bone 410. As a result, the corrosive layer formed along the second peripheral portion 432 has a high bonding strength with the positive electrode current collector 212, and is hardly separated from the positive electrode current collector 212 also when gas is generated on the interface between the positive electrode current collector 212 (second peripheral portion 432) and the corrosive layer. For this reason, a corrosive layer grows on the surface of the second peripheral portion 422, and stress is applied to the inside of the vertical inner bone 410 to deform the vertical inner bone 410. Note that, even in a case where the surface layer of the second peripheral portion 432 is covered with a fibrous metal structure formed by punching and extending in the plane direction of the vertical inner bone 410 as described above, the fibrous metal structure extending in the plane direction of the vertical inner bone 410 is peeled off early due to corrosion as described above, and corrosion progresses in the same manner as that in the case where the fibrous metal structure extends in the depth direction of the vertical inner bone 410.

That is, in the second peripheral portion 432 in which the fibrous metal structure extends in the depth direction of the vertical inner bone 410, the corrosive layer is unlikely to be peeled off as compared with the first peripheral portion 431 in which the fibrous metal structure extends in the plane direction of the vertical inner bone 410, and stress from the corrosive layer which is a factor of deformation of the positive electrode current collector 212 is likely to be applied.

In the positive electrode current collector 212 of the present embodiment, the vertical inner bone 410 is configured so that the length of the first peripheral portion 431 is larger than the length of the second peripheral portion 432 in the XY cross section substantially perpendicular to the extension direction of the vertical inner bone 410. That is, on the peripheral surface 430 of the vertical inner bone 410, the portion where the fibrous metal structure extends in the plane direction of the vertical inner bone 410 is larger than the portion where the fibrous metal structure extends in the depth direction of the vertical inner bone 410. For this reason, in the positive electrode current collector 212 of the present embodiment, the corrosive layer is easily peeled off as compared with the configuration where the portion where the fibrous metal structure extends in the plane direction of the vertical inner bone 410 in the XY cross section is smaller than the portion where the fibrous metal structure extends in the depth direction of the vertical inner bone 410. Accordingly, deformation due to corrosion of the positive electrode current collector 212 can be suppressed. Note that, as described above, since the fibrous metal structure mainly extends in the direction along the periphery on the peripheral surface 440 of the horizontal inner bone 420, the deformation due to corrosion of the horizontal inner bone 420 is small.

Fig. 8 is a graph showing a relationship between a ratio of the length of the second peripheral portion 432 of the vertical inner bone 410 and a corrosion rate and a deformation amount in the positive electrode current collector 212. The ratio (%) of the length of the second peripheral portion 432 is the ratio of the length of the second peripheral portion 432 to the entire length of the peripheral surface 430 of the vertical inner bone 410 in the XY cross section. The corrosion rate (%) is the ratio of the difference between the initial mass before corrosion and the current mass after mass reduction due to corrosion to the initial mass before corrosion for the positive electrode current collector 212 (second peripheral portion 432). The deformation amount (mm) includes an increase amount in the dimension in the width direction (Y direction) of the positive electrode current collector 212 (in Fig. 4, the distance from the left side surface of the vertical frame bone 310 on the left to the right side surface of the vertical frame bone 310 on the right), and an increase amount in the dimension in the vertical direction (Z direction) of the positive electrode current collector 212 (in Fig. 4, the distance from the upper surface of an upper frame bone 321 to the lower surface of a lower frame bone 322). A test condition and a measurement method of a test result are as described below.

First, a test battery including a positive electrode plate configured by using the positive electrode current collector 212 that does not support the positive active material 216 is assembled. The test battery is a single plate cell and includes one of the positive electrode plate and two negative electrode plates that sandwich the positive electrode plate. Each of the negative electrode plates is housed in a bag-shaped separator.

Next, for the test battery, operation (one week) of performing an overcharge test at a constant current of 1.7 A (current density: 0.0054 A/cm²) for five days in a water tank at 75°C, and then resting the test battery for two days is repeated three times (three weeks). When calculating the current density, an apparent electrode area of the positive electrode current collector 212 (grid) is used. The apparent electrode area is twice the product of the dimension in the width direction (Y direction) and the dimension in the vertical direction (Z direction) of the positive electrode current collector 212. After the above operation is repeated three times, the test battery is disassembled. Then, the dimension of a portion that bulges most in the width direction (Y direction) (a portion where a pair of the vertical frame bones 310 are farthest from each other) of the positive electrode current collector 212 of the disassembled test battery is measured, a measurement result is compared with the dimension in the width direction of the positive electrode current collector 212 before the test, and an increase amount in the dimension in the width direction of the positive electrode current collector 212 is obtained. Further, the dimension of a portion that bulges most in the vertical direction (Z direction) (a portion where a pair of the horizontal frame bones 320 are farthest from each other) of the positive electrode current collector 212 is measured, a measurement result is compared with the dimension in the vertical direction of the positive electrode current collector 212 before the test, and an increase amount in the dimension in the vertical direction of the positive electrode current collector 212 is obtained. Next, the positive electrode current collector 212 is washed with water, the corrosive layer is removed by mannitol treatment and the positive electrode current collector 212 is dried, and the corrosion rate is obtained using the above formula.

As shown in Fig. 8, in a sample 1 in which the ratio of the length of the second peripheral portion 432 is 54.3%, the corrosion rate was 76.0%, an increase amount in the dimension in the width direction (Y direction) of the positive electrode current collector 212 was 5.6 mm, and an increase amount in the dimension in the vertical direction (Z direction) of the positive electrode current collector 212 was 3.8 mm. In a sample 2 in which the ratio of the length of the second peripheral portion 432 is 43.8%, the corrosion rate was 73.1%, an increase amount in the dimension in the width direction of the positive electrode current collector 212 was 5.5 mm, and an increase amount in the dimension in the vertical direction of the positive electrode current collector 212 was 1.0 mm. In a sample 3 in which the ratio of the length of the second peripheral portion 432 is 40.0%, the corrosion rate was 73.9%, an increase amount in the dimension in the width direction of the positive electrode current collector 212 was 2.5 mm, and an increase amount in the dimension in the vertical direction of the positive electrode current collector 212 was 0 mm. In a sample 4 in which the ratio of the length of the second peripheral portion 432 is 17.4%, the corrosion rate was 70.6%, an increase amount in the dimension in the width direction of the positive electrode current collector 212 was 0.35 mm, and an increase amount in the dimension in the vertical direction of the positive electrode current collector 212 was 0 mm. From these results, it can be seen that even if the corrosion rates are substantially the same, the lower the ratio of the length of the second peripheral portion 432, the smaller the change amount of the positive electrode current collector 212 becomes. Note that the ratio of the length of the second peripheral portion 432 can be set to a desired value by appropriately changing the condition for press working.

Further, when the ratio of the length of the second peripheral portion 432 is 40% or less, it is possible to suppress an increase amount in the dimension in the vertical direction of the positive electrode current collector 212 in particular. Further, when the ratio of the length of the second peripheral portion 432 is 30% or less, it is possible to suppress the dimension in the width direction of the positive electrode current collector 212 in particular.

### B. Variation:

The technique disclosed in the present description is not limited to the above-described embodiment, and can be modified into various forms without departing from the gist of the invention. For example, modifications as described below are also possible.

The configuration of the lead-acid battery 100 in the above embodiment is merely an example and can be variously modified. For example, in the above embodiment, the frame 300, which is a rectangular frame body, is exemplified as the frame bone portion. However, for example, the frame bone portion may be a quadrangular (square) frame body other than a rectangular frame body, or may be a polygonal (for example, pentagonal) frame body other than a quadrangular frame body. Further, in the above embodiment, the configuration in which the horizontal inner bone 420 is substantially orthogonal to the vertical inner bone 410 is exemplified. However, the horizontal inner bone 420 may intersect the vertical inner bone 410 at a predetermined angle. That is, the horizontal inner bone 420 may include a diagonal bone at a predetermined angle with respect to the vertical inner bone 410.

In the above embodiment, the outer shape and the size in the XY cross section of the vertical inner bone 410 are substantially the same over the entire length of the vertical inner bone 410. However, between at least two portions at different positions from each other in the extension direction of the vertical inner bone 410, at least one of the outer shape and the size in the XY cross section may be different from each other. Similarly, in the above embodiment, the outer shape and the size in the XZ cross section of the horizontal inner bone 420 are substantially the same over the entire length of the horizontal inner bone 420. However, between at least two portions at different positions from each other in the extension direction of the horizontal inner bone 420, at least one of the outer shape and the size in the XZ cross section may be different from each other.

Further, in the above embodiment, in the vertical inner bone 410, the total length of a pair of the first peripheral portions 431 in the XY cross section is larger than the total length of a pair of the second peripheral portions 432 over the entire length of the vertical inner bone 410. However, the total length of a pair of the first peripheral portions 431 in the XY cross section may be larger than the total length of a pair of the second peripheral portions 432 in at least a portion in the extension direction of the vertical inner bone 410.

More preferably, when the average value of the ratios of the length of the first peripheral portion 431 to the length of the peripheral surface 430 and the average value of the ratios of the length of the second peripheral portion 432 to the length of the peripheral surface 430 are compared on a predetermined cross section perpendicular to the extension direction of the vertical inner bone 410, the average value of the ratios of the length of the first peripheral portion 431 is preferably larger than the average value of the ratios of the length of the second peripheral portion 432. Here, the calculation method of the "average value of the ratios of the length of the first peripheral portion 431" and the "average value of the ratios of the length of the second peripheral portion 432" is as described below. Note that, hereinafter, for convenience of explanation, among the horizontal frame bones 320 of the frame 300, the horizontal frame bone 320 on the side connected to the positive electrode ear portion 214 is referred to as the upper frame bone 321 (see Fig. 4), and, among the horizontal frame bones 320 of the frame 300, the horizontal frame bone 320 on the side not connected to the positive electrode ear portion 214 (that is, the frame bone facing the upper frame bone) is referred to as the lower frame bone 322 (see Fig. 4).

First, of the positive electrode current collector 212, the frame 300 and the inner portion 400 excluding the positive electrode ear portion 214 are cut into three equal parts. Specifically, the positive electrode current collector 212 is cut at a first plane P and a second plane Q that are parallel to the extension direction of the lower frame bone 322 and include the thickness direction of the positive electrode current collector 212 in a manner that the distance between the upper frame bone 321 and the lower frame bone 322 is divided into three equal parts. Note that the first plane P is a plane located on the upper frame bone 321 side, and the second plane Q is a plane located on the lower frame bone 322 side. Note that, in a case where the upper frame bone 321 and the lower frame bone 322 are not parallel to each other, the positive electrode current collector 212 only needs to be cut at the first plane P and the second plane Q that are parallel to the extension direction of the lower frame bone 322 and include the thickness direction of the positive electrode current collector 212 in a manner that an area surrounded by the frame 300 is divided into three equal parts when the positive electrode current collector 212 is viewed in a plan view from the thickness direction (X-axis direction). Further, in a case where the vertical inner bone 410 cut at the first plane P or the second plane Q is at a location (what is called a node) where the vertical inner bone 410 and the horizontal inner bone 420 are joined, the average value may be calculated by excluding the cross section, or calculation of the average value may be performed at a position shifted by a predetermined amount so that the position in the extension direction of the vertical inner bone 410 is located in a place that is not a node.

At this time, on the vertical inner bone 410 cut at the first plane P, cross sections as many as the number (fourteen in the example of Fig. 4) of those intersecting the first plane P are exposed. Then, for each of the cross sections, the ratio of the length of the first peripheral portion 431 to the length of the peripheral surface 430 and the ratio of the length of the second peripheral portion 432 to the length of the peripheral surface 430 are calculated. Similarly, for the vertical inner bone 410 cut at the second plane Q, the ratio of the length of the first peripheral portion 431 to the length of the peripheral surface 430 and the ratio of the length of the second peripheral portion 432 to the length of the peripheral surface 430 are calculated.

Then, the arithmetic mean of the ratios of the length of the first peripheral portion 431 calculated in each of the cross sections is obtained, and is set as the "average value of the ratios of the length of the first peripheral portion 431". Similarly, the arithmetic mean of the ratios of the length of the second peripheral portion 432 calculated in each of the cross sections is obtained, and is set as the "average value of the ratios of the length of the second peripheral portion 432".

Further, in the above embodiment, although the present invention is applied to the vertical inner bone 410, the total length of the first peripheral portion 431 may be longer than the total length of the second peripheral portion 432 in at least one of the horizontal inner bone 420 and the frame 300 in addition to the vertical inner bone 410.

Further, in the lead-acid battery 100 of the above embodiment, with respect to the negative electrode current collector 222 constituting the negative electrode plate 220, in at least a part of the inner bones, the length of the first peripheral portion in which the fibrous metal structure extends along the periphery may be configured to be longer than the length of the second peripheral portion in which the fibrous metal structure extends in the depth direction of the periphery on a predetermined cross section substantially perpendicular to the extension direction of the inner bones.

Further, in the lead-acid battery 100 according to the above embodiment, the configuration in which the peripheral surface 430 of the vertical inner bone 410 includes a pair of the first peripheral portions 431 and a pair of the second peripheral portions 432 is described. However, the shape of the peripheral surface 430 of the vertical inner bone 410 is not limited to this. That is, in the vertical inner bone 410, the total length of the first peripheral portion 431 only needs to be longer than the total length of the second peripheral portion 432 on the cross section perpendicular to the extension direction, and the cross-sectional shape is not particularly limited. For example, the configuration may be such that the second peripheral portion 432 is formed only on one side in the width direction of the vertical inner bone 410.

Further the manufacturing method of the lead-acid battery 100 in the above embodiment is merely an example and can be variously modified. For example, note that the punching in S120 and the press working in S130 in Fig. 7 may be performed at the same time.

### DESCRIPTION OF REFERENCE SIGNS

10: Housing
12: Container
14: Lid
16: Cell chamber
18: Electrolyte solution
20: Electrode plate group
30: Positive electrode side terminal portion
32: Positive electrode side bushing
34: Positive pole
40: Negative electrode side terminal portion
42: Negative electrode side bushing
44: Negative pole
52: Positive electrode side strap
54: Negative electrode side strap
56: Connecting member
58: Partition
100: Lead-acid battery
210: Positive electrode plate
212: Positive electrode current collector
214: Positive electrode ear portion
216: Positive active material
220: Negative electrode plate
222: Negative electrode current collector
224: Negative electrode ear portion
226: Negative active material
230: Separator
300: Frame
310: Vertical frame bone
320: Horizontal frame bone
400: Inner portion
410: Vertical inner bone
412: Basic vertical inner bone
420: Horizontal inner bone
430: Peripheral surface
431: First peripheral portion
432: Second peripheral portion
440: Peripheral surface

## Claims

1. A current collector for a lead-acid battery comprising:
a frame bone portion; and
a grid portion that is formed inside the frame bone portion and has an inner bone, wherein
the inner bone
has a fibrous metal structure, and
includes a first peripheral portion in which the fibrous metal structure extends in a plane direction along a peripheral surface of the inner bone, and a second peripheral portion in which the fibrous metal structure extends in a depth direction intersecting a peripheral surface of the inner bone, and
a length of the first peripheral portion is longer than a length of the second peripheral portion on a predetermined cross section substantially perpendicular to an extension direction of the inner bone.

2. The current collector for a lead-acid battery according to claim 1, wherein
on the predetermined cross section, a length of the second peripheral portion is 40% or less an entire circumference of the cross section.

3. The current collector for a lead-acid battery according to claim 2, wherein
on the predetermined cross section, a length of the second peripheral portion is 30% or less an entire circumference of the cross section.

4. A lead-acid battery comprising:
a positive electrode plate;
a negative electrode plate; and
a separator arranged between the positive electrode plate and the negative electrode plate, wherein
at least one of the positive electrode plate and the negative electrode plate includes
the current collector for a lead-acid battery according to any one of claims 1 to 3, and
an electrode material applied to the current collector for a lead-acid battery.

5. A manufacturing method of a current collector for a lead-acid battery that includes a frame-shaped frame bone portion and a grid portion that is formed inside the frame bone portion and has an inner bone, in which a peripheral surface of at least the inner bone of the grid portion includes a first peripheral portion on which a fibrous structure is exposed and a second peripheral portion on which a granular structure is exposed, and, in the at least a part of the inner bone, a length of the first peripheral portion is configured to be longer than a length of the second peripheral portion on a predetermined cross section substantially perpendicular to an extension direction of the inner bone, the manufacturing method comprising:
a preparing step of preparing a rolled plate;
a punching step of forming an intermediate current collector having a plurality of intermediate bones formed in a grid shape by performing punching on the rolled plate; and
a pressing step of performing press working on the intermediate current collector from a first direction substantially orthogonal to the intermediate current collector to deform at least a part of the plurality of intermediate bones so that at least one end portion in a width direction orthogonal to both the first direction and an extension direction of the intermediate bone is thinner than a central portion so as to form the at least a part of the inner bone.

6. A manufacturing method of a current collector for a lead-acid battery, the manufacturing method comprising:
a punching step of punching a rolled material formed of lead or a lead alloy from a thickness direction of the rolled material to form an intermediate current collector; and
a deforming step of performing deformation processing on the intermediate current collector, wherein
in the punching step, the rolled material is punched so that the intermediate current collector has an inner bone extending in a direction substantially parallel to the intermediate current collector and substantially orthogonal to a rolling direction of the rolled material, and
in the deformation step, the deformation processing is applied to the inner bone from a thickness direction of the rolled material.
